# EUROPEAN PATENT APPLICATION

(11) **EP 4 632 651 A1**
(43) Date of publication of application: **15.10.2025**
(21) Application number: 24169345.6
(22) Date of filing: 09.04.2024
(51) Int. Cl.: G06Q 20/32, G06Q 20/36, G06Q 20/38

(54) **SECURE TRANSACTION SCHEME AND DIGITAL WALLET FOR CONSECUTIVE OFFLINE DIGITAL PAYMENTS**

(71) Applicant: Harleman, Jan Mathijs, 4191 LE Geldermalsen (NL)
(72) Inventor: Harleman, Jan Mathijs, 4191 LE Geldermalsen (NL)

(57) **Abstract**

Embodiments of the present disclosure are directed to methods related to securely storing value tokens, a transaction scheme for securely transferring value tokens between a payer's user device and a payee's user device being in close proximity with immediate settlement of transactions (without a need for either device to be connected to a network), and building and maintaining offline digital wallets. These methods offer a maximum level of security for the value tokens and cryptographic keys stored within a user's device, and a maximum level of protection against double spending (or repudiadion, for that matter). Also, these methods ensure that the data stored within value tokens can only be accessed by secure applets within the protection of a secure element. Moreover, these methods allow for so-called consecutive offline payments. In particular, all digital tokens owned by the user are stored in an encrypted form on a data storage medium inside the user device, cryptographic keys are stored in a digital wallet within a secure element, and a register of the identifiers of all tokens previously spent from the user's digital wallet is maintained within the memory of a secure element.

## Description

### TECHNICAL FIELD

The present disclosure generally relates to the field of digital payments. More particularly, the present disclosure relates to a computerised method of performing a digital payment by a payer to a payee, without a need for network connectivity for either party.

### BACKGROUND

Currently, many central banks worldwide are exploring central bank digital currency (CBDC), and an offline version thereof in particular. The European Central Bank, for example, has made a commitment to provide software components for Payment Service Providers (PSPs) to be able to distribute offline digital euro, central services to allow the issuance of offline digital euro, and a solution to implement the offline digital wallet.

Digital currency systems are generally classified as being either token based or account/ledger based. In an account/ledger based system, value is represented as entries in a centralised or distributed data repository, and transactions are ledger entries containing a 'from' (payer) and a 'to' (payee) account identifier and/or other information serving as a ledger of transactions. In a token based system, value is represented by dig which to explore the bus ital tokens, which are cryptographically signed by the issuing authority, and may be stored in electronic form on user devices.

Another way to classify digital currency systems is as either 'online' or 'offline'. Online systems generally require the verification of a transaction against an online ledger at transaction time in order to provide for a secure system. The verification procedure may prevent spending illegitimate copies of a digital currency. Offline systems offer immediate settlement of a transaction, without a need for network connectivity. Recording of completed offline transactions in the online ledger is generally done when the device reconnects to a network (this is called online reconciliation).

Cryptographically signing value tokens (such as digital currency tokens) allows local verification, by any user in the system, that a specific signed value token has indeed been issued by a given issuer. Furthermore, the issuer can add additional conditions or information to such a value token, which can then also be locally verified as having been added by the issuer - for example, the amount or denomination of a digital currency, or an expiry date.

### SUMMARY

Many existing systems for digital currency are based on digital wallets maintaining an internal balance. A digital wallet based on such design, however, has major drawbacks. Once the delicate recording of balances in transacting digital wallets has been compromised (either by a successful attack of a malign attacker or an unexpected system failure), the integrity of the entire digital currency system is compromised as well; restoring this integrity is nearly impossible because of propagating network effects.

In contrast, a digital wallet based on storing value tokens only, has the capability of allowing the manager of the digital currency ecosystem (e.g. a central bank) to both detect and repair any inconsistencies of transaction outcomes upon reconciliaton of the offline digital wallet with the online ledger of the digital currency.

A significant challenge in designing schemes for offline payments and offline wallets related to digital currency, is the prevention of so-called 'double spending', that is the improper duplication of the digital currency and the attempt to spend it more than once.

Yet another challenge for secure offline payments is repudiation. Repudiation occurs when the entity that received the digital currency maliciously insists that they did not receive it or that the digital currency they received is fake.

Embodiments of the present disclosure are directed to methods related to securely storing value tokens, a transaction scheme for securely transferring value tokens between a payer's user device and a payee's user device being in close proximity with immediate settlement of transactions (without a need for either device to be connected to a network), and building and maintaining offline digital wallets. These methods offer a maximum level of security for the value tokens and cryptographic keys stored within a user's device, and a maximum level of protection against double spending (or repudiadion, for that matter).

In particular, these methods ensure that the data stored within value tokens can only be accessed by secure applets within the protection of a secure element; by storing and processing only encrypted versions of value tokens outside a secure element, said value token data are never exposed outside said secure element.

Moreover, these methods also allow for so-called consecutive offline payments, that is for transferred tokens to be respent immediately, without a need for the receiver of the tokens to go online first in order to reconcile the digital wallet with the online ledger.

### BRIEF DESCRIPTION OF THE DRAWINGS

FIG. 1A is a schematic illustration of an example architecture for a digital currency framework in which digital wallets and other entities interact, depicting the flow of certificates.
FIG. 1B is a schematic illustration of an example architecture for a digital currency framework in which digital wallets and other entities interact, depicting the flow of tokens.
FIG. 2 is a schematic illustration of example embodiments of a currency token and a Wallet Certificate.
FIG. 3 is a schematic block diagram of two generic user devices suitable for use in the digital currency framework disclosed herein.
FIG. 4A is a schematic block diagram that depicts a first example architecture of an embodiment of the Wallet Service.
FIG. 4B is a schematic block diagram that depicts a second example architecture of an embodiment of the Wallet Service.
FIG. 5 is a flowchart of a first example embodiment that implements a computerised method in the offline payment scheme.
FIG. 6A is a flowchart of a second example embodiment that implements a computerised method in the offline payment scheme, depicting the transaction initiation stage.
FIG. 6B is a flowchart of a second example embodiment that implements a computerised method in the offline payment scheme, depicting the transaction finalisation stage.
FIG. 7 is a schematic sequence diagram of a second example embodiment that implements a computerised method in the offline payment scheme.
FIG. 8 is a schematic sequence diagram of a third example embodiment that implements a computerised method in the offline payment scheme.

### DETAILED DESCRIPTION

Embodiments of the present disclosure are directed to methods related to securely storing value tokens, a transaction scheme for securely transferring value tokens between a payer's user device and a payee's user device being in close proximity with immediate settlement of transactions (without a need for either device to be connected to a network), and building and maintaining offline digital wallets.

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the disclosure.

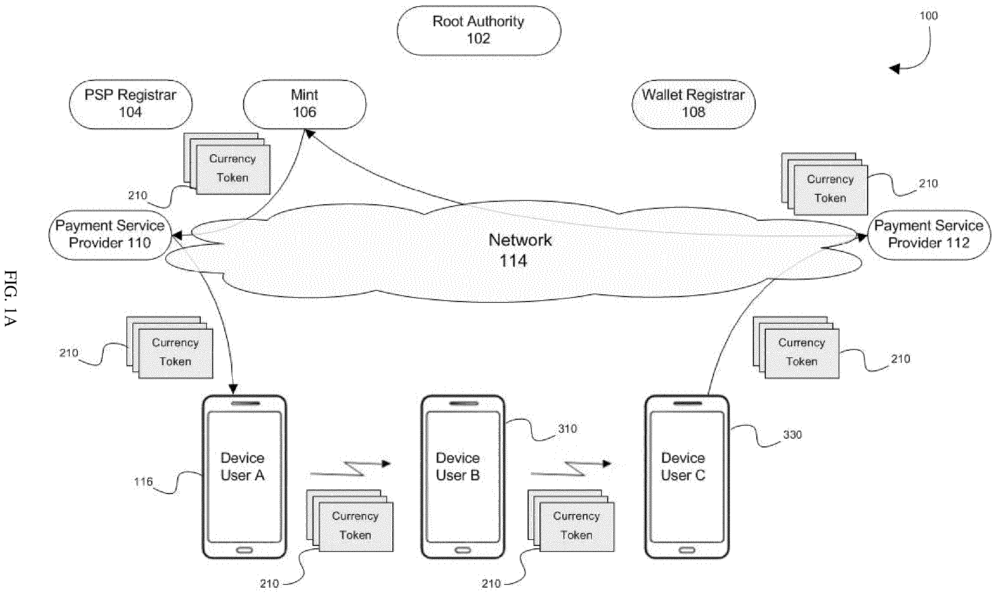

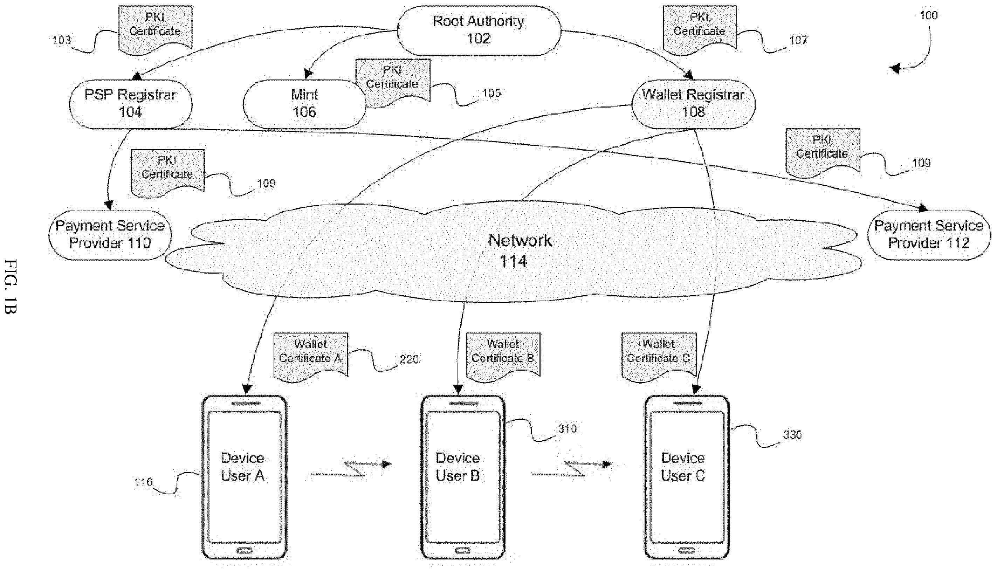

Various different architectures for a digital currency framework may exist in practice. FIG. 1A illustrates an example embodiment of an overall architecture for such a framework, which supports consecutive offline payments. A Public Key Infrastructure (PKI) is an essential part of the framework, as it supports cryptographically signing core data objects, such as tokens and certificates. FIG. 1A also depicts the flow of tokens in the framework; FIG. 1B depicts the flow of certificates in the framework.

Before giving a more detailed explanation related to the drawings of the example architecture of a digital currency framework, first an introduction to key concepts related to this architecture will be given.

The Root Authority (also referred to as Root of Trust) is an institution that is ultimately responsible for issuing assets (such as a digital currency) and managing the framework for those assets. The European Central bank, for example, may represent a Root Authority. The Root Authority, as described herein, may be represented by one or more computer systems, servers, devices, software, databases, networks, protocols, and/or applications that provide the services of the Root Authority. The Root Authority holds the master cryptographic keys of the entire framework, and has the authority to issue Public Key Infrastructure certificates to other entities within the framework.

The Mint is the entity within the framework that issues digital store-of-value tokens, or destroys them. In practice, the Mint and the Root Authority are functions within the same institution (such as The Central Bank of a nation). The Mint, as described herein, may be represented by one or more computer systems, servers, devices, software, databases, networks, protocols, and/or applications provide the services of the Mint. The Mint requires an appropriate, valid PKI certificate issued by the Root Authority in order to function.

A value token is a digital representation of an asset, thus a store of value. A currency token is a specific type of value token, which has cash-like properties. A value token is cryptographically signed by the issuing entity (herein the Mint). A value token may be represented by its unique identifier. Associated with each value token is a set of properties, as described by the value token data structure.

Value tokens are not directly brought into circulation from the Mint to end users, but but through Payment Service Providers (PSP's) which act as intermediaries. Commercial banks and credit card companies are examples of institutions which can represent a Payment Service Provider. In practice, PSP's may also be responsible for executing compliance policies as required by law, e.g. Know Your Customer (KYC). A PSP, as described herein, may be represented by one or more computer systems, servers, devices, software, databases, networks, protocols, and/or applications that provide the services of the PSP.

The PSP Registrar is the entity within the framework that issues certificates to PSP's; the PSP Registrar itself needs a certificate from the Root Authority in order to function. The PSP Registrar, as described herein, may be represented by one or more computer systems, servers, devices, software, databases, networks, protocols, and/or applications that provide the services of the PSP Registrar.

Value tokens and cryptographic keys are held by users within a digital wallet. With each digital wallet within a user device is associated a Wallet certificate; the ID corresponding to the Wallet certificate uniquely identifies a digital wallet.

The Wallet Registrar is the entity within the framework that issues Wallet certificates to registered users. The Wallet Registrar should issue Wallet certificates only to devices which comply with the technical requirements set by the Root Authority, and for which the identity of the user has been established. The Wallet Registrar, as described herein, may be represented by one or more computer systems, servers, devices, software, databases, networks, protocols, and/or applications provide the services of the Wallet Registrar. The Wallet Registrar requires an appropriate, valid PKI certificate issued by the Root Authority in order to function.

A Wallet Service is used to manage the storage of value tokens in a user device, and the transfer of value tokens between user devices. This Wallet Service is responsible for executing a secure value transfer protocol, which is used in transferring value tokens from a payer to a payee. The Wallet Service comprises multiple hardware and software components within a user device.

FIG. 1A illustrates an example embodiment of the overall architecture of various components within the framework. Additionally, FIG. 1A shows how currency tokens **210** are circulating between different entities. Shown is how a plurality of currency token **210** is issued by the Mint **106** and transferred to a Payment Service Provider **110** through a Network **114.** Settlement of this transaction should be handled within a Real Time Gross Settlement System (RTGS), which is not included in the framework herein. The network **114** is a representative of many different types of networks, such as cable networks, the Internet, local area networks, mobile telephone networks, wide area networks and wireless networks, or a combination of such networks.

When a user A withdraws offline currency from an online account with the Payment Service Provider **110,** the transaction amount is deducted from the aforementioned account, and a plurality of currency token **210** with a corresponding total value is transferred to a digital wallet within the user device **116** of user A through the Network **114.** User A now has the possibility to use the offline currency represented by aforementioned plurality of currency token for offline payments to other users which have an appropriately equipped user device, without a need for network connectivity for the users involved in any offline transaction.

When user A pays a certain amount of currency to user B in an offline transaction, a plurality of currency token **210** with a corresponding total value is transferred from a digital wallet within the user device **116** to a digital wallet within the user device **310.** Without a need for connecting user device **310** to any Payment Service Provider through the Network **114,** any of the plurality of currency token **210** can now be used in further online transactions (that is the consecutive offline payment feature of this disclosure).

FIG. 1A shows how in a similar fashion as user A has paid user B in an offline transaction, user B in his turn pays user C in another offline transaction. Furthermore it is shown, that when User C decides he wants to redeem his offline currency tokens for an increase in the balance of his online bank account with Payment Service Provider **112,** a plurality of currency token **210** is transferred from user device **330** to Payment Service Provider **112.** If Payment Service Provider **112** considers his balance of offline currency tokens becoming too large, he may decide to offload a plurality of currency token **210** to the Mint **106,** as shown in FIG. 1A. Settlement of such a transaction will again take place in the aforementioned RTGS, which is not included in the framework herein.

FIG. 1B shows how the appropriate PKI certificates **103, 105** and **107** are issued by the Root Authority **102** to the PSP Registrar **104,** the Mint **106** and the Wallet Registrar **108** respectively.

The Wallet Service in a user device, which supports offline payments, requires a valid Wallet Certificate **220** in order to function. Before issuing a Wallet Certificate **220,** the Wallet Registrar **108** should verify that a user device has proof of the identity of the owner of the device, and that both the hardware and the software of the device are compliant with the requirements for an offline digital wallet within the framework. FIG. 1B shows as an example how user device **116** belonging to user A obtains a Wallet Certificate **220** from the Wallet Registrar **108.**

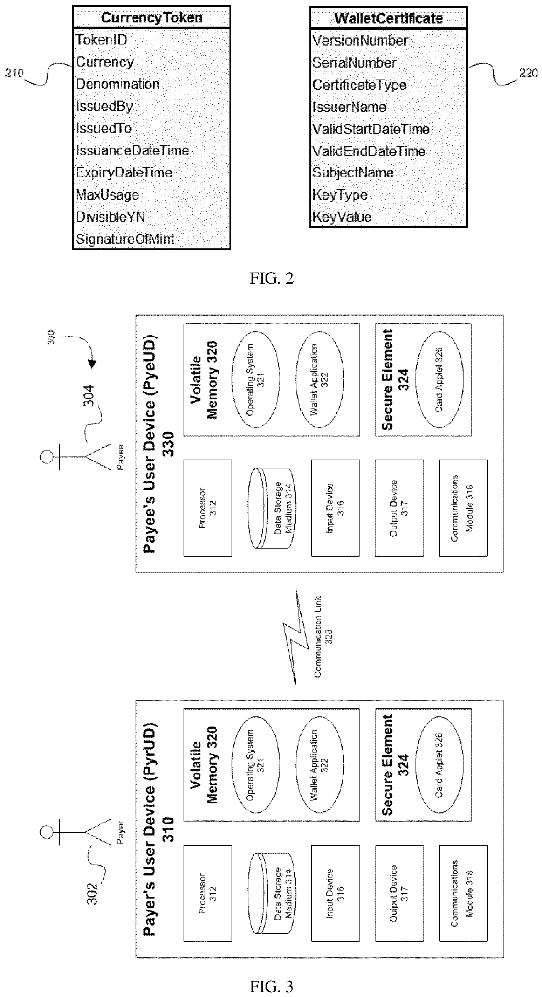

FIG. 2 shows possible definitions for the two data structures currency token **210** and Wallet Certificate **220.** These definitions are given here for illustration purposes only, as the disclosure herein does not directly depend on the exact definition of the attributes of both data structures. Instead, in actual implementations of the offline payment scheme disclosed herein the definition of these attributes may well differ from the examples shown in FIG. 2. Please observe that the definition of the data structure Wallet Certificate **220** very much resembles definitions related to the X.509 standard; this resemblance is intentional.

Most of the attributes shown in FIG. 2 are self-explanatory. However, a few attributes may need some further clarification, which is given below.

*Currency* is a code for the actual fiat currency that the token represents (e.g. EUR, USD etc).

*MaxUsage* is an integer number, which puts an upper bound to the number of times the token may be used in (consecutive) offline payments before it needs to be replaced by a fresh token from the Mint.

*DivisibleYN* is a binary value, which indicates whether the token is allowed to be divided into smaller fractions.

FIG. 3 shows two users, a Payer **302** and a Payee **304,** being in close proximity and wishing to execute an offline payment from Payer User Device **310** to Payee User Device **330** over a Communication Link **328** between these two devices.

Also shown in FIG. 3 is an embodiment of the internal architecture of the devices **310** and **330,** which both comply with the requirements for user devices in the framework herein. The internal architecture is identical for both devices **310** and **330,** albeit that the actual implementation of components within the architecture may vary between both devices. The Payer User Device (PyrUD) **310** may include various components. In at least one configuration, PyrUD **310** comprises one or more processors **312,** and volatile memory **320.** The volatile memory **320** may be implemented in any known memory technology, including but not limited to RAM, SRAM, DRAM, CMOS, FLASH, DDR, SDRAM or some other memory technology. In some embodiments, the memory or parts thereof may be integrated with or internal to the processor(s) **312.** Moreover, the volatile memory may include computer-executable instructions that, when executed by the processor(s) **312** perform various functions and/or operations described herein. More particularly, the volatile memory may include an operating system **321** and a Wallet Application **322** specific for the Wallet Service.

PyrUD **310** may include additional data storage media **314.** Data storage media may include non-volatile, removable and non-removable media implemented in any method or technology for storage of information, such as computer readable instructions, data structures, program modules, or other data. Data storage media include, but are not limited to, read-only memory (ROM), erasable programmable read-only memory (EEPROM), flash memory or other memory technology, compact disc read-only memory (CD-ROM), digital versatile disks (DVD), magnetic disks or other non-transmission medium that may be used to store the desired information and which may be accessed by PyrUD **310.** Any such data storage medium may be part of PyrUD **310.**

PyrUD **310** may include one or more input devices **316,** such as a touch screen display, physical buttons (e.g., keyboard or keypad), cameras, a microphone or micro- phone array, pointing devices (e.g., mouse, pen, stylus, etc.), remote controls, or any other suitable input device for interfacing with PyrUD **310.**

PyrUD **310** may include one or more output devices **317,** such as a display, speakers, or any other suitable output device coupled communicatively to the processor(s) **312** and the volatile memory **320.**

PyrUD **310** may further contain a communications module **318,** which allows PyrUD **310** to communicate with Payee User Device **330** via a short-range Communication Link **328.**

PyrUD **310** may further comprise a secure element **324,** which can be contained in a SIM card, UICC, an embedded chip, an external SD card, or any type of (external) smart card. The secure element includes components typical of a smart card, such as a processor, volatile memory, non-volatile memory, cryptographic processors and random generators. Moreover, the volatile memory of the secure element may include computer-executable instructions that, when executed by the processor(s) within the secure element, perform various functions and/or operations described herein. More particularly, for some example embodiments of this disclosure, the volatile memory of the secure element may include a software application, which will be referred to herein as "card applet" **326.**

Just like PyrUD **310,** the Payee User Device (PyeUD) **330** may contain various components, which may include one or more processors **312,** volatile memory **320,** data storage media **314,** input devices **316,** output devices **317,** a communications module **318** and a secure element **324.** These components are defined in the same way as they have been defined for PyrUD **310.**

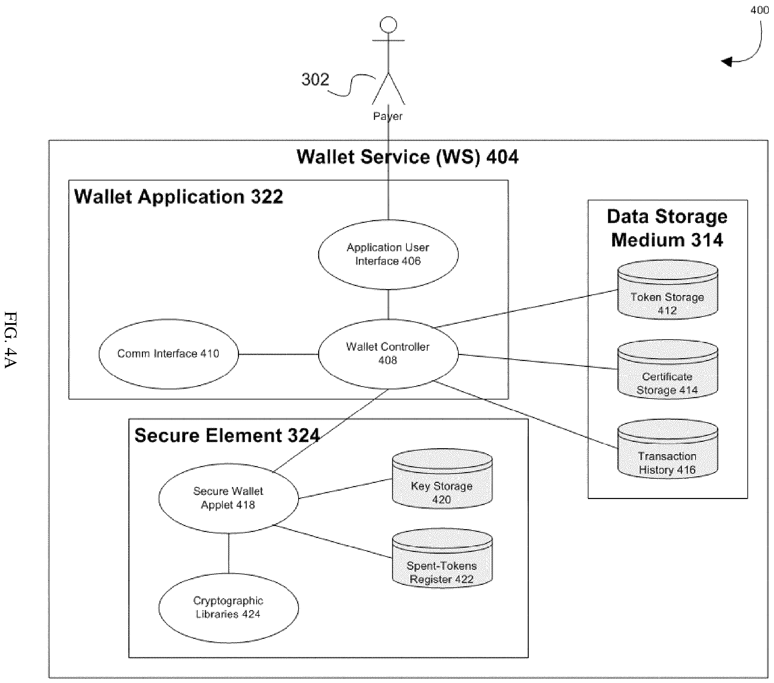

An essential part of this disclosure is a Wallet Service, which is used to manage the storage of value tokens in a user device, and the transfer of value tokens between user devices. FIG. 4A shows a schematic block diagram **400,** which depicts a first example architecture of an embodiment of this Wallet Service **404.**

In this first example of an embodiment of the Wallet Service, its architecture comprises a software application Wallet Application **322** which runs on the operating system **321** within the user device, a plurality of datasets contained within a data storage medium **314,** and a secure element **324.**

In the first example of an embodiment of the Wallet Service, the Wallet Application **322** consists of three software components: an Application User Interface **406** which is used for interacting with the user of the Wallet Service (in FIG. 4A: the payer **302**), a Wallet Controler **408** which is used for managing the flow of data within the Wallet Service, and a Comm(unications) Interface **410** which acts as an intermediary between the Wallet Controler and the operating system **321** when exchanging messages with a Payee User Device **330.**

In the first example of an embodiment of the Wallet Service, the secure element **324** contains at least a card applet Secure Wallet Applet **418,** cryptographic libraries **424,** and a plurality of datasets.

More specifically, the datasets contained within a data storage medium **314** may comprise a Token Storage **412,** a Certificate Storage **414** and a Transaction History **416.** The Token Storage **412** is used for storing currency tokens **210** in an encrypted form. The Token Storage **412** can be implemented in various ways; one such way is a plain key-value store. In some embodiments, in addition to storing the currency tokens themselves, also the denomination (or equivalently: the token value) and the token unique identifier are stored in the Token Storage **412** for each (encrypted) currency token **210.** The Certificate Storage **414** is used for storing publicly available PKI-certificates (e.g. the certificate of the Mint **106**); the Certificate Storage **414** can be implemented in various ways (e.g. as a plain key-value store). The Transaction History **416** is used for storing information related to all previous transactions (both completed and uncompleted). This transaction information may in some embodiments contain a transaction receipt signed by the Wallet Service related to a payee's user device. The Transaction History **416** can be used for reconciliation of the digital wallet with the online ledger, whenever the payer's user device is connected to a network again. The Transaction History **416** can be implemented in various ways (e.g. as a plain key-value store).

Moreover, the datasets contained within the secure element **324** may comprise a Key Storage **420** and a Spent-token Register **422.** The Key Storage contains all the (private) cryptographic keys that belong to the Wallet Service. By storing these cryptographic keys in the (non-volatile memory of a) secure element **324,** they are protected from unauthorised access by other applications running on the user device. The Spent-token Register **422** (STR) contains the unique identifiers of all currency tokens **210** previously spent. Whenever a currency token **210** is used in offline transaction, its unique identifier should be added to this STR **422.** A unique identifier should never be removed from the STR **422.** By recording the unique identifier of all currency tokens previously spent in a STR **422,** a very strong protection against double spending of currency tokens is achieved. A transaction scheme for offline payments of currency tokens within the framework herein, should verify that, before using any token stored in a Token Storage **412** in a transaction, the unique identifier of such a token is not listed in the STR **422.** In some embodiments, in addition to storing the unique identifier in the STR **422** for each token spent, also the fraction spent is recorded (for tokens marked as being divisible).

In some embodiments, the methods described herein can be implemented using Java Card for the Secure Wallet Applet **418.** The Secure Wallet Applet **418** may be loaded into the volatile flash memory section of the secure element **324,** whereas a card execution environment (for example, a Java Card Runtime Environment (JCRE) and the Java Card API) may be stored in the ROM of the secure element **324.**

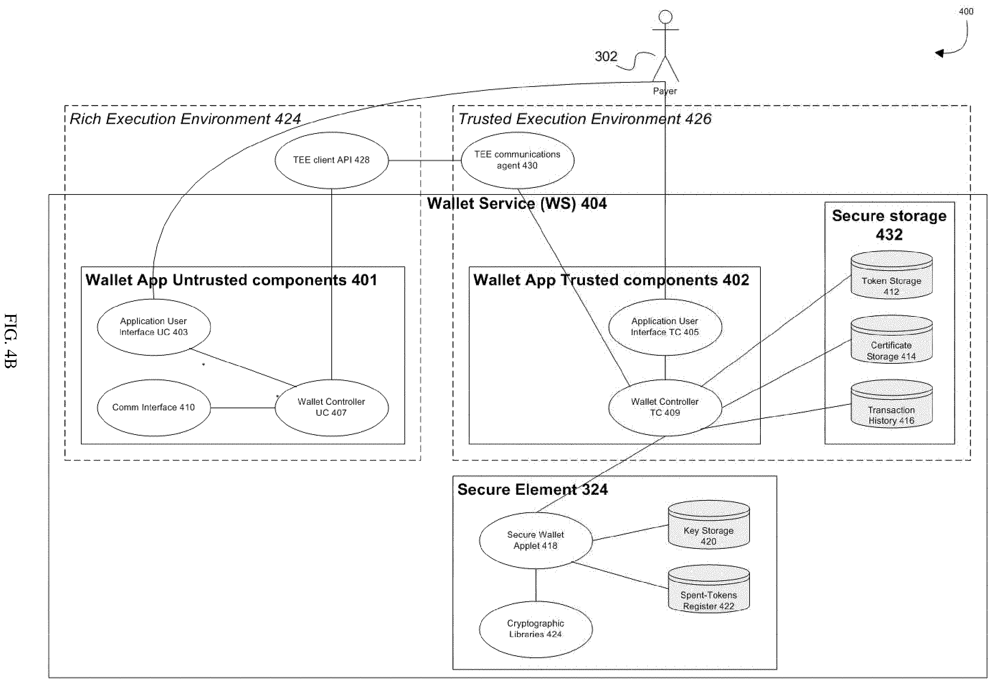

In a second, alternative architecture of the embodiment of the Wallet Service, some software components of the Wallet Application are split into an untrusted component and a trusted component. FIG. 4B is a schematic block diagram **400** that depicts this alternative architecture.

As shown in FIG. 4B, within this architecture application components run in either a Rich Execution Environment **424** (which is usually the operating system of the user device), or in a Trusted Execution Environment **426** (which is dependent on the hardware and actual implementation). The Trusted Execution Environment **426** shields all security-sensitive resources of the Wallet Service (such as application code, memory and data storage) from other applications running in the Rich Execution Environment **424,** thus adding an extra layer of protection to the offline payment scheme disclosed herein. Communication between untrusted and trusted components happens through a TEE client API **428** (running in the Rich Execution Environment **424**) and a TEE comunications agent **430** (running in the Trusted Execution Environment **426**), as shown in FIG. 4B.

More specifically, the Application User Interface **406** is divided into Application User Interface UC **403** and Application User Interface TC **405;** the Wallet Controler **408** is divided into Wallet Controller UC **407** and Wallet Controller TC **409.** An example of the use of the trusted component Application User Interface TC **405** is when authorisation of a transaction (e.g. through a PIN code) is required.

Moreover, the datasets Token Storage **412,** Certificate Storage **414** and Transaction History **416** are in this architecture stored on a Secure storage **432.** Details for this Secure storage **432** are dependent on the actual hardware and Trusted Execution Environment in use.

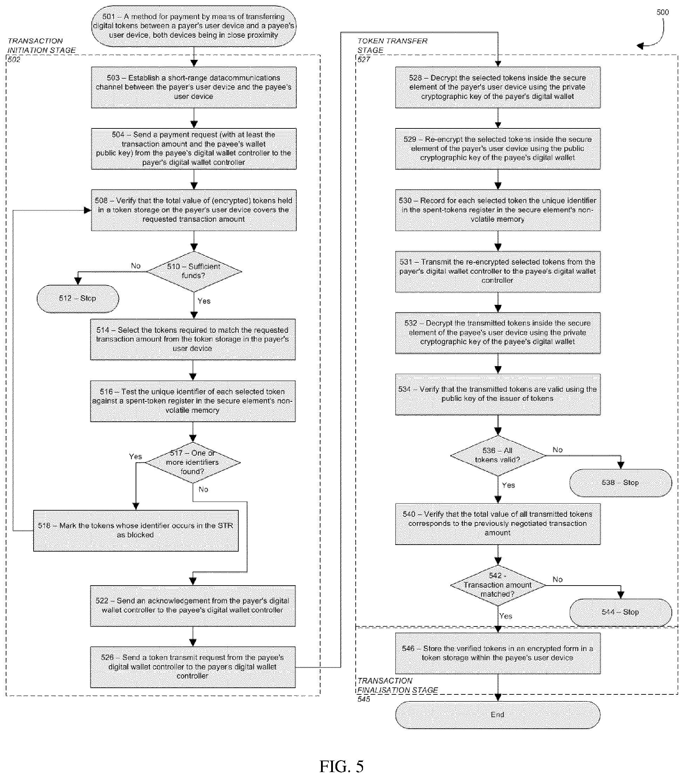

The disclosure herein provides with an offline payment scheme, wherein digital currency tokens are transferred from a payer's user device to a payee's user device. FIG. 5 is a flowchart **500** of a first example embodiment that implements a computerised method **501** in this offline payment scheme. This embodiment of method **501,** as depicted in FIG. 5, can be subdivided in three stages: a transaction initiation stage, a token transfer stage and a transaction finalisation stage. The transaction initiation stage **502** comprises the steps **503** through **526** of this embodiment.

In step **503** of the embodiment, a short-range communications channel is established between the payer's user device and the payee's user device. In each of both user devices, the Wallet Controller **408** interacts with the Application User Interface **406** and the Communications Module **318** (through Comm Interface **410**) in order to establish a communication link **328.** The communication link **328** may be configured for Bluetooth communication, or any other radio-based short-range wireless data communication such as, for instance, Bluetooth Low Energy, RFID, WLAN, WiFi, mesh communication or LTE Direct, without limitation, or any non-radio-based short- range wireless data communication such as, for instance, magnetic communication (such as NFC), (ultra)sound communication, or optical communication (such as IrDA) without limitation. In some embodiments, the communication link **328** comprises equipment and functionality for presenting or scanning a QR code.

In step **504** of the embodiment, a transaction is initiated by the payee's user device by means of sending a payment request message to the payer's user device over the communication link **328.** The payment request contains all the data required by the payer's user device to decide whether to accept or reject the transaction. Required are at least the transaction amount and the public key of the payee's digital wallet. In some alternative implementations, the payment request may contain additional data, for example data related to mutual authentication of respectively the Wallet Service of the payee's user device and the Wallet Service of the payer's user device.

Before accepting the payment request, the Wallet Controller in the payer's user device verifies in step **508** of the embodiment that the payer's digital wallet has sufficient offline funds for completing the transaction. This is done by verifying that the total value of (encrypted) tokens held in a Token Storage **412** on the payer's user device covers the requested transaction amount.

If condition **510** (i.e. there are sufficient offline funds available) is *not* met, the transaction fails (step **512**), and the payer's user device sends a corresponding error message to the the payee's user device.

If condition **510** *is* met, the embodiment of method **501** proceeds by the Wallet Controller of the payer's user device selecting the tokens required to match the requested transaction amount from the Token Storage **412** in the payer's user device (step **514**). In some implementations the tokens are divisible, so an exact amount is *not* required; in other implementations the tokens are not divisible, and an exact amount *is* required.

Before the selected tokens can be transferred, it needs to be verified that they have not previously been spent (step **516**). In this embodiment, the Wallet Controller of the payer's user device uses a service provided by the Secure Wallet Applet **418** to test the unique identifier of each selected token against a Spent-token Register (STR) **422** in the secure element's non-volatile memory. The Wallet Controller and the Secure Wallet Applet **418** are interfacing through application data units (APDU's), which shield both the application code and the datasets related to the Secure Wallet Applet **418** (Key Storage **420** and Spent-token Register **422**) from unauthorised access.

Should the unique identifier of some of the selected tokens appear in STR **422** (condition **517** of the embodiment), then the corresponding tokens should be marked as blocked (step **518**) so that they will not be selected again. Subsequently, the token selection (step **514**) should be reexecuted.

If none of the selected tokens has a unique identifier that appears in STR **422,** the Wallet Controller of the payer's user device sends an acknowledgement message to the payee's Wallet Controller (step **522**). In some alternative implementations this acknowledgement may be omitted altogether; in other alternative implementations this acknowledgement may contain additional data, for example related to mutual authentication of the Wallet Services.

The Wallet Controller of the payee's user device responds in step **526** by sending a token transmit request to the Wallet Controller of the payer's user device. In some alternative implementations this token transmit request may be omitted if the acknowledgement in step **522** has been omitted also.

When step **526** has been successfully completed, the transaction in the embodiment switches from the transaction initiation stage **502** to the token transfer stage **527** (steps **528** through **544**).

The first three steps of the token transfer stage of the embodiment (step **528** through **530**) are carried out by the Wallet Controller of the payer's user device using a service provided by the Secure Wallet Applet **418.** In step **528,** the selected tokens in the payer's user device are first decrypted using an asymmetric cryptographic algorithm (e.g. RSA or ECC) and the private cryptographic key of the payer's digital wallet. This key is stored in Key Storage **420** of the payer's user device. Subsequently, the same tokens are re-encrypted in step **529** of the embodiment using the same algorithm as in step **528,** but now with the public cryptographic key of the payee's wallet. This key has been provided by the Wallet Controller of the payee's user device during the transaction initiation stage. Thirdly, the unique identifier of each of the re-encrypted tokens is added to the Spent-token Register **422** in step **530,** so that they will no longer be available for spending in the future.

In some alternative implementations of the embodiment, prior to re-encryption of the selected tokens in step **529,** an annex with transaction information is attached to each selected token. This transaction information might comprise for example the payee's digital wallet identifier, the transaction amount and a timestamp, all related to the present transaction. The annex should be digitally signed using the private cryptographic key of the payer's digital wallet. Multiple annexes attached to the same selected token will thus constitute a chain of transaction history, to be used by for example by the Mint at a later stage.

The next step in the embodiment (step **531**) is to transfer the re-encrypted tokens from the payer's user device to the payee's user device over the communication link **328.**

After successful transfer of all re-encrypted tokens, the Wallet Controller of the payee's user device uses a service provided by the Secure Wallet Applet **418** to execute steps **532, 534** and **540** of the embodiment. First, in step **532,** the received tokens are decrypted using the private cryptographic key of the payee's wallet. This key is stored in Key Storage **420** of the payee's user device. Next, in step **534,** it is verified that all the received tokens are valid by verification of each token's signature using the public key of the issuer of tokens (in many implementations that is the Mint **106**). This public key is retrieved from the public certificate that is stored in the Certificate Storage **414.**

If condition (536) is *not* met, the transaction fails (step **538**) and a corresponding error message is sent to the payer's user device. If the condition **536** *is* met, however, the transaction processing in the embodiment continues with verifying that the right amount of tokens (that is, the amount negotiated in the transaction initiation stage) has been transfered (step **540**). If that condition (542) is *not* true, the transaction fails (step **544**) and a corresponding error message is sent to the payer's user device.

Finally, if the condition **542** *is* met, the embodiment of method **501** enters the transaction finalisation stage **545.** In the last step (step **546**), the Wallet Controller of the payee's user device stores the received tokens (in encrypted form!) securely in a Token Storage **412** in the payee's user device.

The embodiment of the method **501** as depicted in FIG. 5, is just a basic example of a possible implementation. For practical applications, additional steps are required (for example, for the mutual authentication of both Wallet Services).

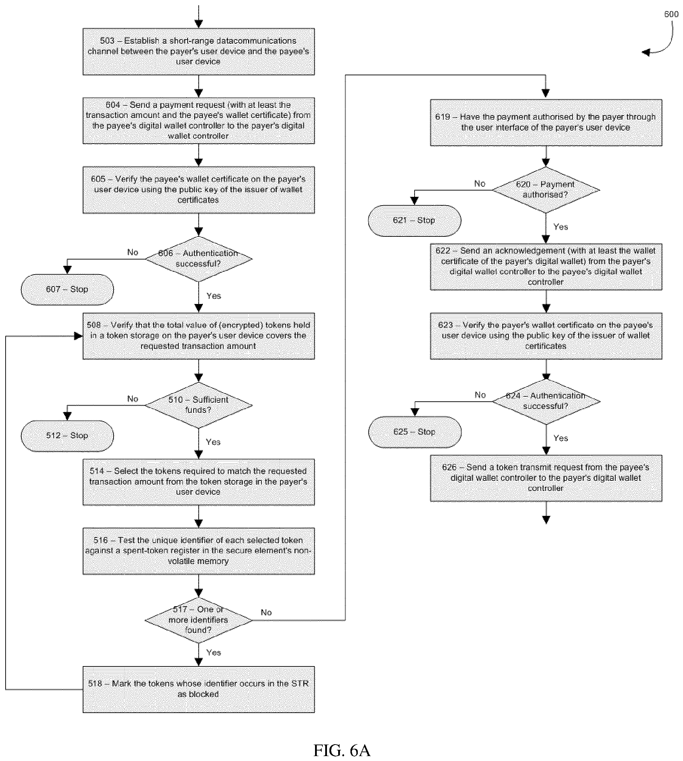

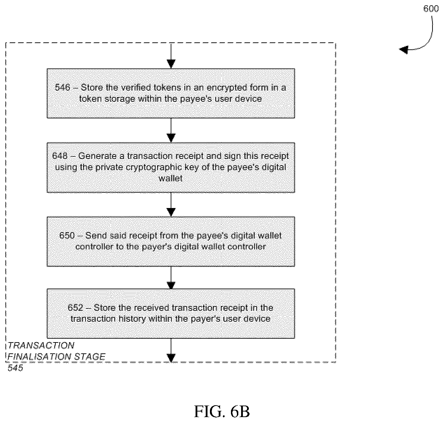

In a second example embodiment **600** that implements a computerised method **501** in this offline payment scheme, the transaction initiation stage and transaction finalisation of the embodiment as shown in FIG. 5 are replaced by the alternative implementations of FIG. 6A (transaction initiation stage) and FIG. 6B (transaction finalisation stage) respectively.

FIG. 6A is a flowchart of the transaction initialisation stage of a second example embodiment **600** within the payment scheme herein, in which some of the steps from FIG. 5 have been modified, and some other steps have been added.

Step **504** of FIG. 5 has been replaced by step **604.** The primary modification relates to adding the payee's wallet certificate to the payment request message. In addition, in some typical implementations, also a nonce r_{A} generated by the Wallet Controller of the payee's user device is added to this message, together with a timestamp t_{A} (in a similar fashion as in the two-way authentication according to the X.509 standard).

After step **604,** the steps **605** through **607** are inserted before step **508** of FIG. 5. In step **605,** the Wallet Controller of the payer's user device verifies the validity of the payee's wallet certificate using the public key of the issuer of certificates (within the framework herein: the Wallet Registrar **108**). This public key is retrieved from the public certificate that is stored in the Certificate Storage **414.** When the payment request message contains authentication information (such as a timestamp t_{A}), as is the case in some typical implementations, this authentication information is verified also.

Should the payee's wallet certificate (or the authentication information) *not* be valid (condition **606**), the transaction fails and a corresponding error message is sent to the payee's user device (step **607**). In case the payee's wallet certificate *is* valid, the transaction initiation stage within this embodiment continues with step **508** as described earlier in relation to FIG. 5.

The steps **508** through **518** for this second example embodiment are identical to those of the first example embodiment (see the description of FIG. 5 herein).

After step **518,** a step **619** is inserted in which the Wallet Controller of the payer's user device uses the Application User Interface **406** to have the payment authorised by the payer. In case the authorisation is *not* granted (condition **620** is false), the transaction fails and a corresponding error message is sent to the payee's user device (step **621**). If condition **620** *is* met, however, an acknowledgement is sent from the payer's Wallet Controller to the payee's Wallet Controller, wherein this acknowledgement contains at least the wallet certificate of the payer's digital wallet (step **622,** which replaces step **522** from FIG. 5). In some typical implementations, also a signed version of the nonce r_{A} (using the private key of the payer's digital wallet) is added to this message, together with a timestamp t_{B} and a nonce r_{B} generated by the Wallet Controller of the payer's user device.

When the payee's user device receives the acknowledgement, it's Wallet Controller responds by verifying the validity of the payer's wallet certificate by using the public key of the issuer of certificates (within the framework herein: the Wallet Registrar **108**). This public key is retrieved from the public certificate that is stored in the Certificate Storage **414.** When the acknowledgement contains authentication information (such as signed version of the nonce r_{A} and a timestamp t_{B}) , as is the case in some typical implementations, this authentication information is verified also.

Should the payer's wallet certificate (or the authentication information) *not* be valid (condition **624**), the transaction fails and a corresponding error message is sent to the payer's user device (step **625**). In case the payer's wallet certificate (and optionally, also the authentication information) *is* valid (and thus condition **624** *is* met), the payee's Wallet Controller responds by sending a token transmit request from the payee's digital wallet controller to the payer's digital wallet controller (step **626**). In some typical implementations, also a signed version of the nonce r_{B} (using the private key of the payee's digital wallet) is added to this message, together with a timestamp t_{C}. Please note that in these implementations the authentication of the payee needs to be completed (by the Wallet Controller of the payer's user device using the signed version of the nonce r_{B}) before transaction processing within the embodiment can proceed with the token transmit stage **527.**

FIG. 6B is a flowchart of the transaction finalisation stage of a second example embodiment **600** within the payment scheme herein. In many implementations of the disclosure, repudiation prevention is achieved by having the payer's Wallet Service to receive a transaction receipt which was signed using the private key of the payee's digital wallet. To that effect, the transaction finalisation stage **545** as depicted in FIG. 5, is extended by steps **648** through **652** (as depicted in FIG. 6B).

In step **648,** the payee's Wallet Controller generates a transaction receipt, which contains at least the IDs of both the payee's digital wallet and the payer's digital wallet, the transaction amount and a timestamp. The payee's Wallet Controller then uses a service provided by the Secure Wallet Applet **418** to have this transaction receipt digitally signed using the private cryptographic key of the payee's digital wallet. Subsequently, in step **650,** said signed transaction receipt is sent from the payee's Wallet Controller to the payer's Wallet Controller over the communication link **328.** Upon receiving the transaction receipt, the payer's Wallet Controller stores said receipt securely in the Transaction History **416** contained within the payer's user device (step **652**).

In an alternative implementation of the second example embodiment **600,** the transaction receipt might be verified first by the payer's Wallet Controller prior to storing said receipt in the transaction history. Should the verification fail, the payer's Wallet Controller may notify the payer about this anomaly, so the payer might take alternative actions. However, as the value tokens should in this stage already have successfully been transferred to the payee's digital wallet (hence the transaction has had an effect which can not be undone), no further action related to the transaction outcome should be taken by the payer's Wallet Controller. Instead, the twosome of Payment Service Provider **110** should settle any inconsistent transaction outcomes during online reconciliation of the user's digital wallet.

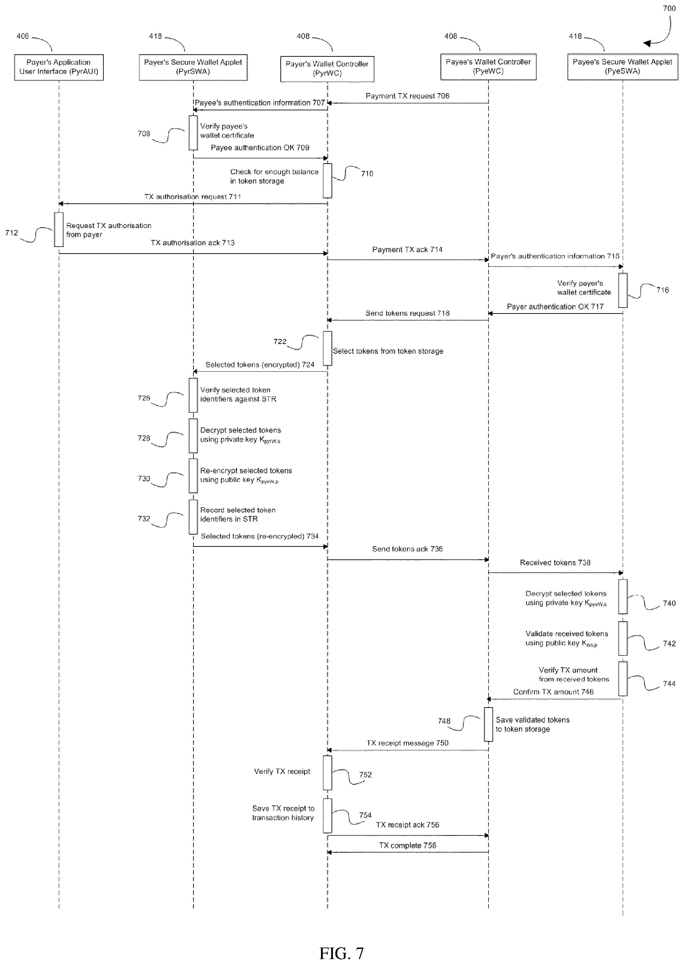

To illustrate how the various components of the offline payment scheme herein are interacting with one another, the sequence diagram **700** shown in FIG. 7 depicts the flow of messages between these components for a successful transaction related to the second example embodiment **600** that implements a computerised method **501** in this offline payment scheme.

In the description of FIG. 7, focus is put on the order of messages and operations. For more details about the operations themselves, as shown in FIG. 7, the reader is referred to the descriptions of FIG. 5, FIG. 6A and FIG. 6B, respectively.

Please note that FIG. 7 contains two instances of a Wallet Controller **408:** one for the payer's user device (abbreviated as PyrWC), and another one for the payee's user device (abbreviated as PyeWC). The same holds for the Secure Wallet Applet **418;** the Secure Wallet Applet for the payer's user device is abbreviated as PyrSWA, whereas the Secure Wallet Applet for the payee's user device is abbreviated as PyeSWA.

The transaction of FIG. 7 starts by PyeWC sending a transaction request **706** to PyrWC over the communication link **328.** PyrWC responds to this request by first verifying the authentication information included in the request. To this extent, this information (which includes the payee's wallet certificate) is sent along a synchronous call to PyrSWA (message **707**). After successful verification of the payee's wallet certificate (operation **708**), an acknowledgement **709** is returned to PyrWC.

Subsequently, PyrWC verifies the Token Storage **412** has enough balance (operation **710**). A successful outcome results in PyrWC requesting transaction authorisation (message **711**) through the Application User Interface **406** of the payer's user device (operation **712**). Now the transaction has been authorised by the payer (message **713**) , PyrWC acknowledges the transaction request back to PyeWC (message **714**). This acknowledgement includes the authentication information of the payer's digital wallet.

When PyeWC receives the acknowledgement **714,** it uses a synchronous call to PyeSWA (message **715**) in order to have said authentication information verified (operation **716**). Upon notification of successful authentication (message **717**), PyeWC proceeds by requesting a token transfer (message **718**) from PyrWC.

Processing of message **718** comprises a number of operations. First, a set of currency tokens is selected from the Token Storage **412** to match the requested transaction amount (operation **722**). Subsequently, a synchronous call to PyrSWA (message **724**) is made to have operations **726** through **732** carried out. These operations include verifying the selected token identifiers against the Spent-token Register **422,** decrypting the selected tokens using the private key K_{pyrW,s}, re-encrypting the selected tokens using the public key K_{pyeW,p} and recording the identifiers of these tokens in the Spent-token Register **422,** respectively. Message **734** returns control of the transaction back to PyrWC.

The selected tokens which thus have been re-encrypted, are sent to PyeWC via message **736.** Upon receipt of the transferred tokens by PyeWC, PyeWC forwards them to PyeSWA through a synchronous call **738** for validation. First, PyeSWA decrypts the received tokens using the private key K_{pyeW,s} of the payee's digital wallet (operation **740**). Next, each of the received tokens is validated using the public key K_{iss,p} of the issuer of currency tokens (operation **742**). Thirdly, the total amount of received tokens is verified to be equal to the previously negotiated transaction amount (operation **744**). When all of these three operations have been executed successfully, control is handed back to PyeWC (message **746**).

Notification of successful validation of the received tokens through message **746** leads to PyeWC storing the received tokens in the Token Storage **412** of the payee's user device (operation **748**). Subsequently, PyeWC prepares a signed transaction receipt and sends it to PyrWC (message **750**).

When PyrWC receives the transaction receipt, it verifies that said transaction receipt is properly signed (operation **752**) and subsequently stores the transaction receipt in the Transaction History **416** (operation **754**).

Finally, the transaction processing is terminated by PyrWC and PyeWC exchanging the messages Transaction receipt received **756** and Transaction complete **758.**

In both the first and second example embodiments that implement a computerised method **501** in this offline payment scheme, value tokens are sent from the payer's user device to the payee's user device in encrypted form, wherein the cryptographic algorithm used for the encryption is an asymmetric algorithm (e.g. RSA or ECC). However, such an asymmetric algorithm is usually very computational intensive, thus slow. In a third example embodiment that implement a computerised method **501** in this offline payment scheme, in order to improve performance the encryption algorithm used for transferred tokens is a symmetric algorithm (such as 3DES or AES). However, tokens stored in the Token Storage **412** are still encrypted using an asymmetric algorithm. Temporarily encrypting transferred tokens with a symmetric algorithm requires a transaction-specific key Kₛₑₛₛᵢₒₙ.

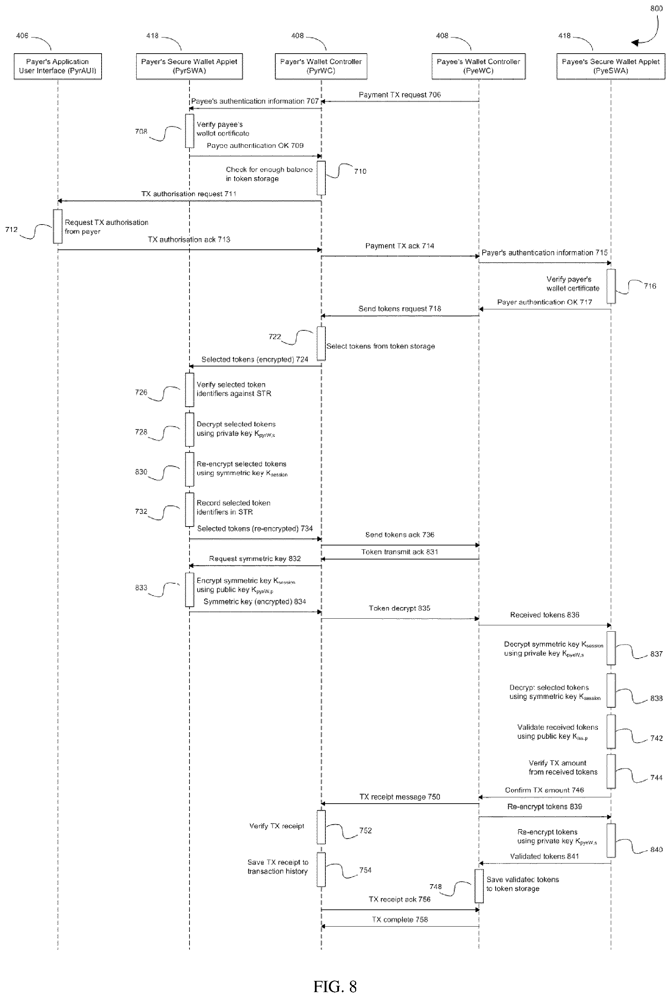

The sequence diagram **800** shown in FIG. 8 is a modified version of diagram **700** of FIG. 8, and illustrates which modifications to the second embodiment of method **501** are required to obtain the third embodiment of method **501.** These modifications will be discussed more in detail in the following paragraphs. The messages and operations shown in FIG. 8 describe a successful transaction related to the third embodiment of method **501.** This successful transaction related to the third embodiment of method **501** will from now on be indicated as Transaction type 2, whereas the transaction related to the second embodiment of method **501** will be indicated as Transaction type 1.

The events **706** through **728** are identical for Transaction type 1 and Transaction type 2. Operation **730** in Transaction type 1 however, is replaced with operation **830** for Transaction type 2. Instead of using the public cryptographic key of the payee's digital wallet (related to an asymmetric cryptographic algorithm) for the decryption, a transaction-specific key Kₛₑₛₛᵢₒₙ is used. This key Kₛₑₛₛᵢₒₙ is randomly generated by PyrSWA.

Events **732** through **736** are identical again for both transaction types. But for Transaction type 2, compared to Transaction type 1 a number of extra events are inserted after operation **736.**

First, a message Token transmit ack **831** is sent from PyeWC to PyrWC in response to receiving the message Send tokens ack **736.** Please observe that the transmitted tokens contained within message **736** cannot be decrypted by PyeSWA now, because the required key Kₛₑₛₛᵢₒₙ is still lacking.

In order to acquire the key Kₛₑₛₛᵢₒₙ, a message Token transmit ack **831** is sent from PyeWC to PyrWC. Subsequently, PyrWC activates a service provided by PyrSWA through sending a message Request symmetric key **832.** Said service encrypts the transaction-specific Kₛₑₛₛᵢₒₙ using an asymmetric cryptographic algorithm and the public cryptographic key of the payee's digital wallet (operation **833**), after which this encrypted key is returned to the PyrWC inside a message Symmetric key (encrypted) **834.** Subsequently, said encrypted key is forwarded to PyeWC to PyrWC by means of the message Token decrypt **835.**

PyeWC responds to receiving message **835** by sending a message Received tokens **836** to PyeSWA. Please note that message **836** differs from message Received tokens **738,** in that the tokens contained within the message are encrypted using a different key. Message **836** activates a service provided by PyeSWA.

The first operation of the service provided by PyeSWA is operation **837,** in which the encrypted key Kₛₑₛₛᵢₒₙ is decrypted using the private cryptographic key of the payee's digital wallet.

The second operation of the service provided by PyeSWA is operation **838,** in which the received tokens are decrypted using the key Kₛₑₛₛᵢₒₙ. The remaining events of said service are for Transaction type 2 identical to those for Transaction type 1 (that is, events **742** through **746**).

However, instead of executing operation **748** after message **746** (as was done for Transaction type 1), for Transaction type 2 two series of events now happen in parallel. At the same time that the events **750** through **756** are being executed (these events being identical for both transaction types) , also events **839** through **841** are executed.

The message Re-encrypt tokens **839** activates a service provided by PyeSWA (operation **840**) that re-encrypts the previously decrypted transmitted tokens using an asymmetric cryptographic algorithm and private cryptographic key of the payee's digital wallet, so that they are safe for storing in the Token Storage **412.**

After completing operation **840,** control is handed over back to PyeWC by means of the message Validated tokens **841.** PyeWC then stores the validated tokens contained within message **841** in Token Storage **412** (operation **748**), which operation is identical for both Transaction type 1 and Transaction type 2.

Finally, PyeWC will await reception of the message Transaction receipt received **756** before sending the message Transaction complete **758** back to PyrWC, which finalises Transaction type 2.

## Claims

1. A method for securely storing store-of-value digital tokens without risk of double spending, comprising:
- storing all digital tokens owned by the user in an encrypted form on a data storage medium attached to, connected to or comprised within the user device, along with the value of each token and a means to uniquely identify each token (both in an unencrypted form), wherein the non-volatile memory of a secure element that is attached to, connected to or comprised within the user device is not excluded for serving as said storage medium;
- storing the cryptographic key(s) necessary to decrypt said tokens in a so-called digital wallet which is comprised within the non-volatile memory of a secure element that is attached to, connected to or comprised within the user device; and
- maintaining a register of the identifiers of all tokens previously spent from the user's digital wallet (STR), said register being comprised within the non-volatile memory of said secure element.

2. The method of claim 1, furthermore comprising:
- storing the PKI-certificate of the issuer of said tokens (which certificate contains, amongst others, the public key of said issuer) on a data storage medium attached to, connected to or comprised within the user device; and
- storing the PKI-certificate of the issuer of wallet certificates (which PKI-certificate contains, amongst others, the public to key of said issuer) on a data storage medium attached to, connected to or comprised within the user device.

3. The method of claim 2, furthermore comprising:
- storing, on a data storage medium attached to, connected to or comprised within the user device, a digital wallet certificate which has previously been issued on the name of the device's user, with which certificate is associated a public-private cryptographic key pair.

4. The method of claim 1, wherein in addition to storing the identifiers in a register of previously spent tokens, also the fraction spent is stored in said register for each token that has the property of being divisible.

5. A method for payment by means of transferring digital tokens between a payer's user device and a payee's user device, both devices being in close proximity, comprising:
- establishing a short-range datacommunications channel between the payer's user device and the payee's user device, wherein each user device is associated with its own digital wallet service, and each digital wallet service is associated with its own digital wallet controller;
- sending a payment request from the payee's digital wallet controller to the payer's digital wallet controller over said datacommunications channel, where said request contains at least the transaction amount;
- verifying that the total value of tokens held in a token storage on a data storage medium attached to, connected to or comprised within the payer's user device, covers the requested transaction amount, wherein said tokens are encrypted using a cryptographic key K_{pyr,1} and the non-volatile memory of a secure element that is attached to, connected to or comprised within the payer's user device is not excluded for serving as said storage medium;
- selecting the tokens required to match the requested transaction amount from said token storage;
- verifying the unique identifier of each selected token against a register of the identifiers of all tokens previously spent from the payer's digital wallet (STR), said register being contained within the non-volatile memory of the secure element that is attached to, connected to or comprised within the payer's user device, and rejecting any selected token whose identifier occurs in said register;
- decrypting the selected tokens by executing a first cryptographic algorithm on a processor comprised within the secure element of the payer's user device using the cryptographic key K_{pyr,1};
- re-encrypting the selected tokens by executing a second cryptographic algorithm on said processor using a cryptographic key K_{pyr,2};
- recording for each of the selected tokens it's unique identifier in said register of tokens previously spent (STR);
- transmitting the re-encrypted selected tokens over said datacommunications channel from the payer's digital wallet controller to the payee's digital wallet controller;
- decrypting the transmitted tokens by said second cryptographic algorithm on a processor that is comprised within the secure element of the payee's user device using a cryptographic key K_{pye,1};
- verifying that the transmitted tokens are valid using the public key of the issuer of tokens;
- verifying that the total value of all transmitted tokens corresponds to the previously negotiated transaction amount; and
- in response to verification of the validity and total value of all transmitted tokens, storing said tokens in an encrypted form in a token storage on a data storage medium attached to, connected to or comprised within the payee's user device.

6. The method of claim 5, furthermore comprising the method of claim 3 applied to the payer's user device.

7. The method of claim 5, furthermore comprising:
- in response to verification of the token value balance, and prior to selecting tokens, having the payment authorised by the payer through the user interface of the payer's user device.

8. The method of claim 5, furthermore comprising:
- including the wallet certificate of the payee's digital wallet in the payment request;
- verifying said wallet certificate on the payer's user device using the public key of the issuer of wallet certificates prior to verifying the total value of tokens held;
- in response to verification of the token value balance, acknowledging said payment request by the payer's digital wallet controller, wherein this acknowledgement includes the wallet certificate of the payer's digital wallet;
- in response to receiving an acknowledgement to the payment request, verifying said payer's wallet certificate on the payee's user device using the public key of the issuer of wallet certificates; and
- in response to verification of the payer's wallet certificate, sending a token transmit request from the payee's digital wallet controller to the payer's digital wallet controller.

9. The method of claim 8, furthermore comprising:
- after having stored the received tokens in a token storage on a data storage medium, comprised within the payee's user device, sending a transaction receipt over said datacommunications channel from the payee's digital wallet controller to the payer's digital wallet controller, wherein the transaction receipt is digitally signed using the private cryptographic key of the payee's digital wallet; and
- storing the received transaction receipt in the transaction history on a data storage medium attached to, connected to or comprised within the payer's user device.

10. The method of claim 8, wherein:
- the first cryptographic algorithm is an asymmetric cryptographic algorithm;
- the second cryptographic algorithm is the same as the first cryptographic algorithm;
- the cryptographic key K_{pyr,1} is the private cryptographic key of the payer's digital wallet;
- the cryptographic key K_{pyr,2} is the public cryptographic key of the payee's digital wallet; and
- the cryptographic key K_{pye,1} is the private cryptographic key of the payee's digital wallet.

11. The method of claim 5, wherein for each user device the application associated with the digital wallet service is split into untrusted components and trusted components, and said trusted components are executed within a trusted execution environment which shields security-sensitive code and data from other applications running on the operating system of the user device.

12. The method of claim 5, furthermore comprising:
- after decrypting the selected tokens and prior to re-encrypting said tokens, attaching an annex containing transaction information to each selected token, wherein said transaction information contains at least the payee's digital wallet address and a timestamp and wherein said annex is digitally signed using the private cryptographic key of the payer's digital wallet.

13. The method of claim 8, wherein:
- the first cryptographic algorithm is an asymmetric cryptographic algorithm;
- the second cryptographic algorithm is a symmetric cryptographic algorithm;
- the cryptographic key K_{pyr,1} is the private cryptographic key of the payer's digital wallet;
- the cryptographic key K_{pyr,2} is a transaction-temporary cryptographic key randomly selected by the payer's digital wallet controller;
- the cryptographic key K_{pye,1} is the same as the cryptographic key K_{pyr,2};
- decrypting the transmitted tokens is preceded by sending a token transmit ack message from the payee's digital wallet controller to the payer's digital wallet controller; and
- receiving said token transmit ack message is followed by encrypting the transaction-temporary cryptographic key K_{pyr,2} by executing said first cryptographic algorithm on a processor comprised within the secure element of the payer's user device using the public cryptographic key of the payee's digital wallet; and, subsequently
- sending a token decrypt message from the payer's digital wallet controller to the payee's digital wallet controller, wherein said message comprises the thus encrypted temporary cryptographic key K_{pyr,2}; and, subsequently
- extracting the temporary cryptographic key K_{pyr,2} from said token decrypt message by executing said first cryptographic algorithm on a processor comprised within the secure element of the payee's user device using the private cryptographic key of the payee's digital wallet; and
- storing the received tokens in a token storage attached to, connected to or comprised within the payee's user device is preceded by first re-encrypting said tokens by executing said first cryptographic algorithm on a processor comprised within the secure element of the payee's user device using the public cryptographic key of the payee's digital wallet.
